(19) Europäisches Patentamt / European Patent Office / Office européen des brevets

(11) **EP 3 825 847 B1**

(12) **EUROPEAN PATENT SPECIFICATION**

(45) Date of publication and mention
of the grant of the patent:
**11.05.2022 Bulletin 2022/19**

(21) Application number: **20217331.6**

(22) Date of filing: **01.04.2020**

(51) International Patent Classification (IPC):
**G06F 9/38** *(2018.01)*     **G06F 9/30** *(2018.01)*

(52) Cooperative Patent Classification (CPC):
**G06F 9/30043; G06F 9/30036; G06F 9/30076;
G06F 9/3016; G06F 9/30192**

(54) **DATA PROCESSING METHOD AND APPARATUS, AND RELATED PRODUCT**

DATENVERARBEITUNGSVERFAHREN UND -VORRICHTUNG UND ZUGEHÖRIGES PRODUKT

PROCÉDÉ ET APPAREIL DE TRAITEMENT DE DONNÉES ET PRODUIT ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.04.2019 CN 201910272411
04.04.2019 CN 201910272625
04.04.2019 CN 201910272660
19.04.2019 CN 201910320091
19.04.2019 CN 201910319165
25.04.2019 CN 201910340177
25.04.2019 CN 201910341003**

(43) Date of publication of application:
**26.05.2021 Bulletin 2021/21**

(62) Document number(s) of the earlier application(s) in
accordance with Art. 76 EPC:
**20783678.4 / 3 800 547**

(73) Proprietor: **Cambricon Technologies Corporation
Limited
Beijing 100191 (CN)**

(72) Inventors:
• **LIU, Shaoli
Beijing, 100190 (CN)**
• **WANG, Bingrui
Beijing, 100190 (CN)**
• **LIANG, Jun
Beijing, 100191 (CN)**

(74) Representative: **Huang, Liwei
Cäcilienstraße 12
40597 Düsseldorf (DE)**

(56) References cited:
**WO-A1-2018/217360     US-A1- 2011 161 625
US-B1- 6 192 384**

**Description**

**Technical Field**

The disclosure relates generally to the field of computer technologies, and more specifically to a data processing method and an apparatus and related products.

**Background**

With the continuous development of the AI (Artificial Intelligence) technology, it has gradually obtained wide application and worked well in the fields of image recognition, speech recognition, and natural language processing, and the like. However, as the complexity of AI algorithms is growing, the amount of data and data dimensions that need to be processed are increasing. In related arts, processors usually determine the data address by obtaining parameters of instructions, and then read and use the data according to the data address, which requires those skilled in the art to set relevant parameters for data access (such as the relationship between data and data, or data dimension and data dimension, *etc.)* when designing parameters, so as to generate instructions and transmit the instructions to the processors to complete the data access. The above-mentioned method reduces the processing efficiency of the processors. WO2018/217360 discloses a hardware accelerator with tensor registers, with a vector_read machine instruction and a matrix_read machine instruction.

**Summary**

In order to solve the technical problems, the present disclosure provides a data processing technical solution.
A first aspect of the present disclosure provides a data processing method including: when an operand of a decoded first processing instruction includes an identifier of a descriptor, obtaining content of the descriptor according to the identifier of the descriptor, where the descriptor is configured to indicate a shape of a tensor; and executing the first processing instruction according to the content of the descriptor.
A second aspect of the present disclosure provides a data processing apparatus including: a content obtaining module configured to, when an operand of a decoded first processing instruction includes the identifier of the descriptor, obtain content of a descriptor according to an identifier of the descriptor, where the descriptor is configured to indicate a shape of a tensor; and an instruction executing module configured to execute the first processing instruction according to the content of the descriptor.
A third aspect of the present disclosure provides a neural network chip including the data processing apparatus.
A fourth aspect of the present disclosure provides an electronic device including the neural network chip.
A fifth aspect of the present disclosure provides a board card including: a storage device, an interface apparatus, a control device, and the above-mentioned neural network chip. The neural network chip is connected to the storage device, the control device, and the interface apparatus respectively; the storage device is configured to store data; the interface apparatus is configured to implement data transmission between the neural network chip and an external apparatus; and the control device is configured to monitor a state of the neural network chip.
According to embodiments of the present disclosure, by introducing a descriptor indicating the shape of a tensor, the corresponding content of the descriptor can be determined when the identifier of the descriptor is included in the operand of a decoded processing instruction, and the processing instruction can be executed according to the content of the descriptor, which can reduce the complexity of data access and improve the efficiency of data access.
In order to make other features and aspects of the present disclosure clearer, a detailed description of exemplary embodiments with reference to the drawings is provided below.

**Brief Description of the Drawings**

The accompanying drawings contained in and forming part of the specification together with the specification show exemplary embodiments, features and aspects of the present disclosure and are used to explain the principles of the disclosure.

Fig. 1 shows a flowchart of a data synchronization method according to an embodiment of the present disclosure.
Fig. 2 shows a schematic diagram of a data storage space of a data synchronization method according to an embodiment of the present disclosure.
Fig. 3 shows a block diagram of a data synchronization apparatus according to an embodiment of the present disclosure.

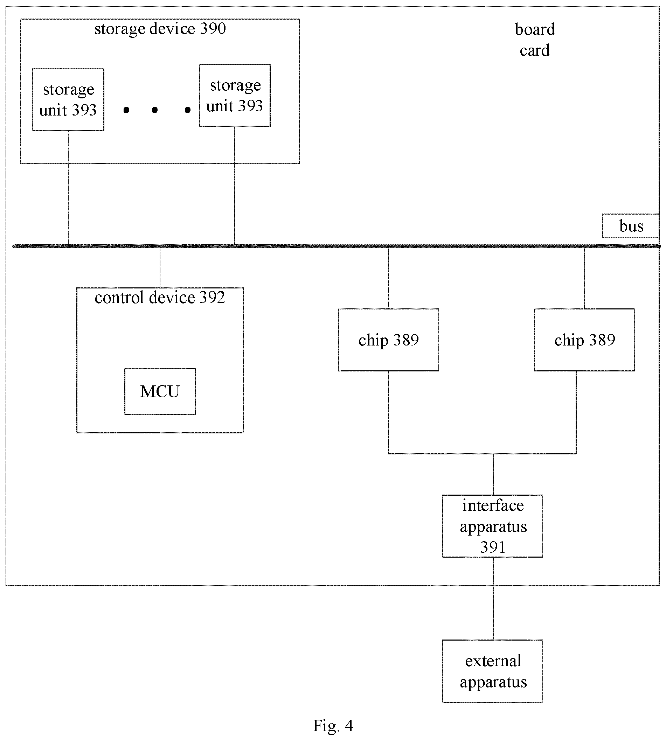

Fig. 4 shows a block diagram of a board card according to an embodiment of the present disclosure.

## Detailed Description of the Embodiments

Various exemplary embodiments, features, and aspects of the present disclosure will be described in detail below with reference to the drawings. The same marks in the drawings represent the same or similar elements. Although various aspects of the embodiments are shown in the drawings, the drawings are not necessarily drawn to scale unless specifically noted.

The "exemplary" as used herein means "serving as an example, embodiment, or illustration." Any embodiment described herein as "exemplary" is not necessarily to be interpreted as superior to or better than other embodiments.

In addition, in order to better illustrate the present disclosure, a lot of specific details are given in the detailed description below. Those skilled in the art should understand that the present disclosure can be implemented without certain specific details. In some embodiments, methods, means, components, and circuits that are well known to those skilled in the art have not been described in detail in order to highlight the main idea of the present disclosure.

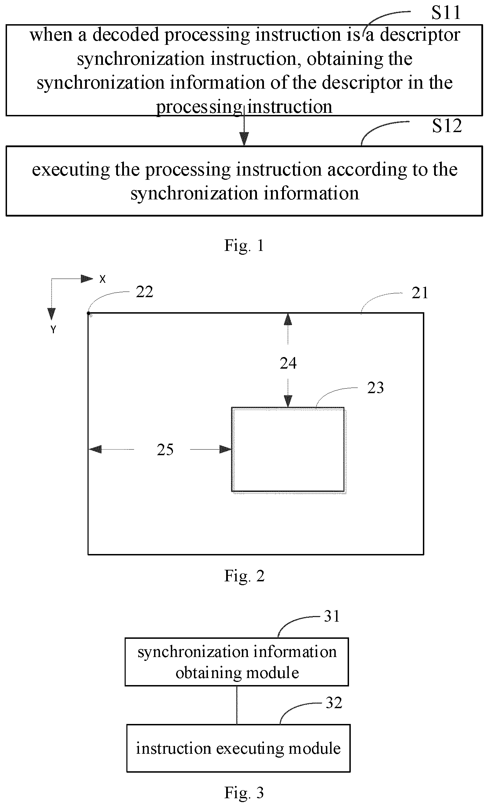

According to the embodiment of the present disclosure, a data synchronization method is provided. Fig. 1 shows a flowchart of a data synchronization method according to an embodiment of the present disclosure. The data synchronization method is applied to a processor, where the processor may include a general-purpose processor (such as a CPU (central processing unit), a GPU (graphics processor)) and a dedicated processor (such as an AI processor, a scientific computing processor, or a digital signal processing, *etc.*). This disclosure does not limit the type of the processor.

As shown in Fig. 1, the data synchronization method includes:

a step S11, when a decoded processing instruction is a descriptor synchronization instruction, obtaining the synchronization information of the descriptor in the processing instruction, where the descriptor is used to indicate the shape of the tensor data to be synchronized; and
a step S12, executing the processing instruction according to the synchronization information.

For example, the tensor data to be synchronized may include N-dimensional tensor data (N is an integer greater than or equal to 0, for example, N=1, 2, or 3), where the tensor may have various forms of data composition, and the tensor may have different dimensions. For example, a scalar can be viewed as a 0-dimensional tensor, a vector can be viewed as a 1-dimensional tensor, and a matrix can be a tensor of two or more dimensions. The shape of a tensor includes dimensions of the tensor and a size of each dimension of each tensor and the like. For example, for a tensor:

$$\begin{bmatrix} 1 & 2 & 3 & 4 \\ 11 & 22 & 33 & 44 \end{bmatrix}$$

the shape of the tensor can be described by the descriptor as (2, 4), in other words, the tensor is a 2-dimensional tensor represented by two parameters, and a size of a first dimension (column) of the tensor is 2, a size of a second dimension (row) of the tensor is 4. It should be noted that the present disclosure does not limit the manner in which the descriptor indicates the shape of the tensor. When tensor data is stored in a memory, the shape of the tensor data cannot be determined according to a data address (or storage area) of the tensor, and then related information such as the relationship among a plurality of pieces of tensor data cannot be determined, as a result, the processor is inefficient in accessing tensor data, and the data synchronization is also complicated.

In this case, a descriptor (tensor descriptor) may be set to indicate the shape of the tensor (N-dimensional tensor data), where the value of N can be determined according to a count of dimensions (orders) of the tensor data, and can also be set according to the usage of the tensor data. For example, when the value of N is 3, the tensor data is 3-dimensional tensor data, and the descriptor can be used to indicate the shape (such as offset, size, *etc.*) of the 3-dimensional tensor data in three dimensions. It should be understood that those skilled in the art can set the value of N according to actual needs, which is not limited in the present disclosure.

In a possible implementation method, the descriptor may include an identifier, content, and the like, where the identifier of the descriptor may be used to distinguish the descriptor, for example, the identifier may be used to number the descriptor; and the content of the descriptor may include at least one shape parameter (such as a size of each dimension of the tensor, *etc.*) representing the shape of the tensor data, and may also include at least one address parameter (such as a base address of a datum point) representing an address of the tensor data. The present disclosure does not limit the specific parameters included in the content of the descriptor.

By using the descriptor to indicate tensor data, the shape of tensor data can be represented, and related information such as the relationship among a plurality of pieces of tensor data can be determined, so as to improve the access efficiency of tensor data and reduce the complexity of data synchronization.

During data processing, data synchronization for the tensor data in a current processor A1 (such as a processor core of an artificial intelligence chip) may be executed, for example, an operation result of another processor A0 may be synchronized to the processor A1 as input data of another operation. In this case, the descriptor synchronization instruction may be used to achieve data synchronization. In other words, when there is tensor data to be synchronized, a sender for data synchronization (such as another processor A0) may send the descriptor synchronization instruction to the processor A1 to instruct the current processor A1 to synchronize the data.

In a possible implementation method, before the step S11, the data synchronization method further includes: decoding the received processing instruction to obtain a decoded processing instruction, where the decoded processing instruction includes an operation code used to instruct to perform synchronization processing.

For example, when the current processor A1 receives the processing instruction, the processor A1 decodes (parses) the processing instruction to obtain the decoded processing instruction. The decoded processing instruction may include at least an operation code to indicate a processing type corresponding to the processing instruction and an operand to indicate data to be processed. The processing instruction may include a data access instruction, an operation instruction, a descriptor management instruction, a synchronization instruction, and/or the like. The present disclosure does not limit the specific type of the processing instruction and the specific manner of decoding.

In a possible implementation method, if the operation code of the decoded processing instruction instructs to execute descriptor synchronization processing, the processing instruction is determined to be a descriptor synchronization instruction. When the decoded processing instruction is a descriptor synchronization instruction, the processor may obtain the synchronization information of the descriptor in the processing instruction in the step S11 to synchronize the tensor data to be synchronized indicated by the descriptor.

In a possible implementation method, the synchronization information of the descriptor may include at least one of the identifier of the descriptor and the content of the descriptor. If a descriptor indicating the tensor data to be synchronized has been registered in the processor and does not need to be modified, the synchronization information in the descriptor synchronization instruction may only include the identifier of the descriptor (for example, when the identifier of the descriptor is TR1, the descriptor synchronization instruction is represented as Send TR1), and the processor may synchronize the tensor data according to the identifier (TR1) of the descriptor in the processing instruction. If the descriptor indicating the tensor data to be synchronized is not registered in the processor, the synchronization information in the descriptor synchronization instruction may include the content of the descriptor, and the processor may synchronize the tensor data according to the content of the descriptor in the processing instruction. If the descriptor indicating the tensor data to be synchronized has been registered in the processor and the content of the descriptor needs to be modified, the synchronization information in the descriptor synchronization instruction may include both the identifier of the descriptor and the content of the descriptor, and the processor may synchronize the tensor data according to the identifier of the descriptor and the content of the descriptor in the processing instruction. The present disclosure does not limit the specific content of the synchronization information of the descriptor.

In a possible implementation method, after the synchronization information of the descriptor synchronization instruction is obtained, the processor may execute the processing instruction (the descriptor synchronization instruction) according to the synchronization information in the step S12 to achieve the synchronization of the tensor data.

According to the data synchronization method provided in the embodiment of the present disclosure, by setting a descriptor indicating the shape of tensor data, when the decoded processing instruction is a descriptor synchronization instruction, the synchronization information of the descriptor in the processing instruction may be obtained, and the processing instruction may be executed according to the synchronization information of the descriptor to achieve the synchronization of the tensor data, thereby reducing synchronization overhead, and improving the efficiency of data synchronization.

In a possible implementation method, the step S12 may include: when the storage area of the tensor data indicated by the descriptor is in a shared storage space, obtaining the tensor data from the shared storage space according to the synchronization information.

For example, a plurality of processors (a plurality of cores) may have a shared storage space, such as an off-chip memory that can be accessed by both the processor A0 and the processor A1. The shared storage space may be a storage space in which a plurality of cores (a plurality of processors) can access data, or a storage space in which some cores (some processors) can access data. The shared storage space for cores may be preset, and the present disclosure does not limit the setting method of the shared storage space.

In a possible implementation method, if the storage address of the tensor data to be synchronized is in the shared storage space, since the current processor A1 may also access data from the shared storage space, the processor A1 can directly read the tensor data according to the content of the descriptor to synchronize the tensor data.

In a possible implementation method, if the synchronization information in the descriptor synchronization instruction only includes the identifier of the descriptor, for example, when the identifier of the descriptor is TR1, and the descriptor synchronization instruction is represented as Send TR1, the processor A1 may internally search for the content of the descriptor corresponding to the identifier of the descriptor, and then obtain the tensor data to be synchronized from the shared storage space according to the content of the descriptor, thereby achieving the entire synchronization process.

In a possible implementation method, if the synchronization information in the descriptor synchronization instruction includes the identifier of the descriptor and the content of the descriptor, the processor A1 may search for a descriptor corresponding to an identifier of a descriptor, and update original content of the descriptor according to the content of the descriptor in the descriptor synchronization instruction; and then the processor A1 may further obtain the tensor data to be synchronized from the shared storage space according to the updated content of the descriptor, thereby achieving synchronization of the tensor data.

In a possible implementation method, if the descriptor synchronization instruction only includes the content of the descriptor, the processor A1 may register a descriptor indicating the tensor data to be synchronized according to the content of the descriptor, and obtain the tensor data to be synchronized from the shared storage space according to the content of the descriptor, thereby achieving synchronization of tensor data.

In this way, according to the synchronization information of the descriptor in the descriptor synchronization instruction, the tensor data to be synchronized can be obtained, and the synchronization of the tensor data can be realized, so as to avoid unnecessary data transfer, reduce the times of accessing the tensor data, and improve the processing efficiency of synchronization.

In a possible implementation method, a plurality of processors (a plurality of cores) may have a shared storage space which is dedicated to store the synchronized data. The storage space of synchronized data may be the above-mentioned shared storage space, or a part of the shared storage space, or a storage space different from the shared storage space, which is not limited in the present disclosure.

In a possible implementation method, the storage space of synchronized data may be a storage space in which a plurality of cores (a plurality of processors) can access synchronized data, or a storage space in which part of cores (part of processors) can access synchronized data, which is not limited in the present disclosure.

In a possible implementation method, if the synchronization information in the descriptor synchronization instruction includes the address of the content of the descriptor of the tensor data to be synchronized in a storage space of the synchronized data, the processor A1 may obtain the content of the descriptor of the tensor data to be synchronized from the storage space of the synchronized data according to the address, and then register the descriptor according to the content of the descriptor and determine the data address of the tensor data to be synchronized, after that, the processor A1 may obtain the tensor data to be synchronized, thereby achieving the entire synchronization process.

In this way, the data transfer between processors during synchronization can be further reduced, and the processing efficiency of synchronization can be improved.

In a possible implementation method, the identifier and content of the descriptor can be stored in the descriptor storage space, which may be a storage space in an internal memory of the processor (such as a register, an on-chip SRAM, or other medium cache, *etc.).* The data storage space of the tensor data indicated by the descriptor may be a storage space in an internal memory of the processor (e.g., an on-chip cache) or a storage space in an external memory (an off-chip memory) connected to the processor. The data address in the data storage space may be an actual physical address or a virtual address. The present disclosure does not limit a position of the descriptor storage space and a position of the data storage space, and the type of the data address.

In a possible implementation method, the identifier and content of the descriptor and the tensor data indicated by the descriptor can be located in a same area. For example, a continuous area of an on-chip cache can be used to store the related content of the descriptor, where an address of the area is ADDR0-ADDR1023. An address ADDR0-ADDR31 can be used to store the identifier of the descriptor, an address ADDR32-ADDR63 can be used to store the content of the descriptor, and an address ADDR64-ADDR1023 can be used to store the tensor data indicated by the descriptor. The address ADDR is not limited to 1 bit or 1 byte, and the ADDR is an address unit used to represent an address. Those skilled in the art can determine the storage area and the address thereof according to actual situations, which is not limited in the present disclosure.

In a possible implementation method, the identifier, content of the descriptor and the tensor data indicated by the descriptor can be stored separately in different areas of an internal memory. For example, a register can be used as the descriptor storage space to store the identifier and content of the descriptor, and an on-chip cache can be used as the data storage space to store the tensor data indicated by the descriptor.

In a possible implementation method, a special register (SR) may be provided for the descriptor, where the data in the descriptor may be immediate data or can be obtained from the special register. When the register is used to store the identifier and content of the descriptor, a serial number of the register can be used to indicate the identifier of the descriptor. For example, if the serial number of a register is 0, the identifier of the stored descriptor is 0. When the descriptor in the register is valid, an area can be allocated in a caching space (such as creating a tensor caching unit for each tensor data in the cache) according to the size of the tensor data indicated by the descriptor for storing the tensor data. It should be understood that a preset caching space may be also used to store the tensor data, which is not limited in the present disclosure.

In a possible implementation method, the identifier and content of the descriptor can be stored in an internal memory, and the tensor data indicated by the descriptor can be stored in an external memory. For example, on-chip storage of the identifier and content of the descriptor and off-chip storage of the tensor data indicated by the descriptor may be adopted.

In a possible implementation method, the data address of the data storage space corresponding to the descriptor may be a fixed address. For example, a separate data storage space may be provided for the tensor data, and a start address of each tensor data in the data storage space corresponds to the identifier of the descriptor. In this case, the processor can determine the data address of the tensor data according to the content of the descriptor.

In a possible implementation method, when the data address of the data storage space corresponding to the descriptor is a variable address, the descriptor may be also used to indicate the address of N-dimensional tensor data, where the content of the descriptor may further include at least one address parameter representing the address of the tensor data. For example, if the tensor data is a piece of 3-dimensional data, when the descriptor points to the address of the tensor data, the content of the descriptor may include an address parameter indicating the address of the tensor data, such as a start address of the tensor data; or the content of the descriptor may include a plurality of address parameters of the address of the tensor data, such as a start address + address offset of the tensor data, or address parameters of the tensor data in each dimension. Those skilled in the art can set the address parameters according to actual needs, which is not limited in the present disclosure.

In a possible implementation method, the address parameter of the tensor data includes a base address of the datum point of the descriptor in the data storage space of the tensor data, where the base address may be different according to the change of the datum point. The present disclosure does not limit the selection of the datum point.

In a possible implementation method, the base address may include a start address of the data storage space. When the datum point of the descriptor is a first data block of the data storage space, the base address of the descriptor is the start address of the data storage space. When the datum point of the descriptor is not the first data block in the data storage space, the base address of the descriptor is the physical address of the data block in the data storage space.

In a possible implementation method, the shape parameter of the tensor data includes at least one of the followings: a size of the data storage space of the tensor data in at least one of N dimensions, a size of the storage area in at least one of N dimensions, an offset of the storage area in at least one of N dimensions, a position of at least two vertices at diagonal positions in N dimensions relative to the datum point, and a mapping relationship between a data description position of the tensor data indicated by the descriptor and the data address of the tensor data indicated by the descriptor. The data description position is a mapping position of a point or an area in the tensor data indicated by the descriptor, for example, if the tensor data is a piece of 3-dimensional data, the descriptor can use a coordinate (x, y, z) to represent the shape of the tensor data, and the data description position of the tensor data can be represented by the coordinate (x, y, z), and the data description position of the tensor data may be a position of a point or an area where the tensor data is mapped in a 3-dimensional space.

It should be understood that those skilled in the art may select a shape parameter representing tensor data according to actual conditions, which is not limited in the present disclosure.

Fig. 2 shows a schematic diagram of a data storage space according to an embodiment of the present disclosure. As shown in Fig. 2, a data storage space 21 stores a piece of 2-dimensional data in a row-first manner, where the data storage space 21 can be represented by (x, y) (where the x axis extends horizontally to the right, and the y axis extends vertically down), a size in the x axis direction (a size of each row) is ori_x (which is not shown in the figure), a size in the y axis direction (total count of rows) is ori_y (which is not shown in the figure), and a start address PA_start (a base address) of the data storage space 21 is a physical address of a first data block 22. A data block 23 is part of the data in the data storage space 21, where an offset 25 of the data block 23 in the x axis direction is represented as offset x, an offset 24 of the data block 23 in the y axis direction is represented as offset_y, the size in the x axis direction is represented as size x, and the size in the y axis direction is represented as size_y.

In a possible implementation method, when a descriptor is used to define the data block 23, the datum point of the descriptor may be a first data block of the data storage space 21, the base address of the descriptor is the start address PA_start of the data storage space 21, and then the content of the descriptor of the data block 23 can be determined according to the size ori x of the data storage space 21 in the x axis, the size ori_y in the y axis, the offset offset y of the data block 23 in the y axis direction, the offset offset x of the data block 23 in the x axis direction, the size size x in the x axis direction, and the size size_y in the y axis direction.

In a possible implementation method, the following formula (1) can be used to represent the content of the descriptor:

$$\begin{cases} \text{X direction：} \ ori\_x, offset\_x, size\_x \\ \text{Y direction：} \ ori\_y, offset\_y, size\_y \\ \qquad\quad PA\_start \end{cases} \tag{1}$$

It should be understood that although the descriptor describes a 2-dimensional space in the above-mentioned example, those skilled in the art can set the dimensions represented by the content of the descriptor according to actual situations, which is not limited in the present disclosure.

In a possible implementation method, the content of the descriptor of the tensor data may be determined according to the base address of the datum point of the descriptor in the data storage space and the position of at least two vertices at diagonal positions in N dimensions relative to the datum point.

For example, the content of the descriptor of the data block 23 in Fig. 2 can be determined according to the base address PA_base of the datum point of the descriptor in the data storage space and the position of two vertices at diagonal positions relative to the datum point. First, the datum point of the descriptor and the base address PA_base in the data storage space are determined, for example, a piece of data (such as a piece of data at position (2, 2)) in the data storage space 21 is selected as a datum point, and a physical address of the selected data in the data storage space is used as the base address PA_base. And then, the position of at least two vertices at diagonal positions of the data block 23 relative to the datum point is determined, for example, the position of vertices at diagonal positions from the top left to the bottom right relative to the datum point is used, where the relative position of the top left vertex is (x_min, y_min), and the relative position of the bottom right vertex is (x_max, y_max); and then the content of the descriptor of the data block 23 can be determined according to the base address PA_base, the relative position (x_min, y_min) of the top left vertex, and the relative position (x_max, y_max) of the bottom right vertex.

In a possible implementation method, the following formula (2) can be used to represent the content of the descriptor:

$$\begin{cases} \text{X direction: } x\_min, x\_max \\ \text{Y direction: } y\_min, y\_max \\ \qquad PA\_base \end{cases} \tag{2}$$

It should be understood that although the top left vertex and the bottom right vertex are used to determine the content of the descriptor in the above-mentioned example, those skilled in the art may set at least two specific vertices according to actual needs, which is not limited in the present disclosure.

In a possible implementation method, the content of the descriptor of the tensor data can be determined according to the base address of the datum point of the descriptor in the data storage space and the mapping relationship between the data description position of the tensor data indicated by the descriptor and the data address of the tensor data indicated by the descriptor, where the mapping relationship between the data description position and the data address can be set according to actual needs. For example, when the tensor data indicated by the descriptor is 3-dimensional spatial data, the function f (x, y, z) can be used to define the mapping relationship between the data description position and the data address.

In a possible implementation method, the following formula (3) can be used to represent the content of the descriptor:

$$\begin{cases} f\big(x, \ y, \ z\big) \\ \ PA\_base \end{cases} \tag{3}$$

It should be understood that those skilled in the art can set the mapping relationship between the data description position and the data address according to actual situations, which is not limited in the present disclosure.

When the formula (1) is used to represent the content of the descriptor, for any datum point in the tensor data, the data description position is set to $(x_q, y_q)$, and then the data address $PA2_{(x,y)}$ of the data in the data storage space can be determined using the following formula (4):

$$PA2_{(x,y)} = PA\_start + \big(\text{offset\_y} + y_q - 1\big) * \text{ori\_x} + \big(\text{offset\_x} + x_q\big) \tag{4}$$

By adopting the above-mentioned method provided by the present disclosure, the processor may compute the data address of the tensor data indicated by the descriptor in the data storage space according to the content of the descriptor, and then execute processing (data operation, data synchronization, *etc.*) according to the address, Therefore, the complexity of data access can be reduced, and the processing efficiency of the processor can be improved.

Fig. 3 shows a block diagram of a data synchronization apparatus according to an embodiment of the present disclosure. The data synchronization apparatus may be applied to a processor. As shown in Fig. 3, the data synchronization apparatus may include:

a synchronization information obtaining module 31 configured to obtain the synchronization information of a descriptor in a processing instruction when a decoded processing instruction is a descriptor synchronization instruction, where the descriptor is used to indicate a shape of tensor data to be synchronized; and
an instruction executing module 32 configured to execute the processing instruction according to the synchronization information.

In a possible implementation method, the synchronization information includes at least one of the following: an identifier of the descriptor and content of the descriptor.

In a possible implementation method, the instruction executing module includes a data obtaining sub-module configured to, when a storage area of the tensor data indicated by the descriptor is in a shared storage space, obtain the tensor data from the shared storage space according to the synchronization information.

In a possible implementation method, the descriptor is used to indicate the shape of N-dimensional tensor data, where N is an integer greater than or equal to 0. The content of the descriptor includes at least one shape parameter indicating the shape of the tensor data.

In a possible implementation method, the descriptor is also used to indicate the address of N-dimensional tensor data. The content of the descriptor further includes at least one address parameter indicating the address of the tensor data.

In a possible implementation method, the address parameter of the tensor data includes a base address of a datum point of the descriptor in a data storage space of the tensor data.

In a possible implementation method, the shape parameter of the tensor data includes at least one of the followings:

a size of the data storage space in at least one of N dimensions, a size of the storage area of the tensor data in at least one of N dimensions, an offset of the storage area in at least one of N dimensions, a position of at least two vertices at diagonal positions in N dimensions relative to the datum point, and a mapping relationship between a data description position of the tensor data indicated by the descriptor and the data address of the tensor data indicated by the descriptor.

In a possible implementation method, the data synchronization apparatus further includes a decoding module configured to decode a received processing instruction to obtain a decoded processing instruction, where the decoded processing instruction includes an operation code which is used to instruct synchronization processing.

In a possible implementation method, the present disclosure further provides an artificial intelligence chip including the data synchronization apparatus.

In a possible implementation method, the present disclosure provides a board card including a storage device, an interface apparatus, a control device, and the above-mentioned artificial intelligence chip. The artificial intelligence chip is connected to the storage device, the control device, and the interface apparatus, respectively; the storage device is configured to store data; the interface apparatus is configured to implement data transfer between the artificial intelligence chip and the external equipment; and the control device is configured to monitor the state of the artificial intelligence chip.

**Claims**

1. A data synchronization method, comprising:

   when there is tensor data to be synchronized, by a first processor, sending a processing instruction to a second processor;
   after receiving the processing instruction, by the second processor, decoding the processing instruction to obtain the decoded processing instruction;
   when the decoded processing instruction is a descriptor synchronization instruction, by the second processor, obtaining synchronization information of the descriptor in the processing instruction, where the descriptor is used to indicate a shape of tensor data to be synchronized, and the synchronization information of the descriptor includes at least one of an identifier of the descriptor and content of the descriptor, and
   by the second processor, achieving the synchronization of the tensor data according to the identifier of the descriptor and/or the content of the descriptor in the synchronization information.

2. The data synchronization method of claim 1, wherein the achieving the synchronization of the tensor data according to the identifier of the descriptor and/or content of the descriptor in the synchronization information includes:
   when a storage area of the tensor data indicated by the descriptor is in a shared storage space, obtaining the tensor data from the shared storage space according to the synchronization information.

3. The data synchronization method of claim 1 or 2, wherein the descriptor is used to indicate a shape of N-dimensional tensor data, wherein N is an integer greater than or equal to 0, wherein the content of the descriptor includes at least one shape parameter indicating the shape of the tensor data.

4. The data synchronization method of claim 3, wherein the descriptor is also used to indicate an address of the N-dimensional tensor data, wherein the content of the descriptor further includes at least one address parameter indicating the address of the tensor data.

5. The data synchronization method of claim 4, wherein the address parameter of the tensor data includes a base address of a datum point of the descriptor in a data storage space of the tensor data.

6. The data synchronization method of claim 5, wherein the shape parameter of the tensor data includes at least one of followings:
a size of the data storage space in at least one of N dimensions, a size of the storage area of the tensor data in at least one of N dimensions, an offset of the storage area in at least one of N dimensions, a position of at least two vertices at diagonal positions in N dimensions relative to the datum point, and a mapping relationship between a data description position of the tensor data indicated by the descriptor and a data address of the tensor data indicated by the descriptor.

7. The data synchronization method of any one of claims 1-6, further comprising:
decoding a received processing instruction to obtain a decoded processing instruction, where the decoded processing instruction includes an operation code used to instruct synchronization processing.

8. A data synchronization apparatus, comprising means for carry out the method of any of the claims 1 to 7.

9. An artificial intelligence chip, comprising the data synchronization apparatus of claim 8.

10. An electronic device, comprising the artificial intelligence chip of claim 9.

11. Aboard card, comprising a storage device, an interface apparatus, a control device, and the artificial intelligence chip of claim 9, wherein

the artificial intelligence chip is connected to the storage device, the control device, and the interface apparatus, respectively,
the storage device is configured to store data,
the interface apparatus is configured to implement data transfer between the artificial intelligence chip and an external equipment, and
the control device is configured to monitor a state of the artificial intelligence chip.

12. The board card of claim 11, wherein

the storage device includes a plurality of groups of storage units, wherein each group of the storage units is connected with a neural network chip by a bus, and the storage units are DDR SDRAM,
the chip includes a DDR controller configured to control data transfer and data storage of each storage unit, and
the interface apparatus is a standard PCIE interface.

**Patentansprüche**

1. Datensynchronisationsverfahren, umfassend:

wenn zu synchronisierende Tensordaten vorhanden sind, durch einen ersten Prozessor, Senden einer Verarbeitungsanweisung an einen zweiten Prozessor;
nach Empfangen der Verarbeitungsanweisung, durch den zweiten Prozessor, Decodieren der Verarbeitungsanweisung, um die decodierte Verarbeitungsanweisung zu erhalten;
wenn die decodierte Verarbeitungsanweisung eine Deskriptor-Synchronisationsanweisung ist, durch den zweiten Prozessor, Erhalten von Synchronisationsinformationen des Deskriptors in der Verarbeitungsanweisung, wobei der Deskriptor verwendet wird, um eine Form von zu synchronisierenden Tensordaten anzugeben, und die Synchronisationsinformationen des Deskriptors mindestens eines von einer Kennung des Deskriptors und einem Inhalt des Deskriptors beinhalten, und

durch den zweiten Prozessor, Erzielen der Synchronisation der Tensordaten gemäß der Kennung des Deskriptors und/oder dem Inhalt des Deskriptors in den Synchronisationsinformationen.

2. Datensynchronisationsverfahren nach Anspruch 1, wobei das Erzielen der Synchronisation der Tensordaten gemäß der Kennung des Deskriptors und/oder dem Inhalt des Deskriptors in den Synchronisationsinformationen beinhaltet: wenn sich ein durch den Deskriptor angegebener Speicherbereich der Tensordaten in einem gemeinsam genutzten Speicherplatz befindet, Erhalten der Tensordaten aus dem gemeinsam genutzten Speicherplatz gemäß den Synchronisationsinformationen.

3. Datensynchronisationsverfahren nach Anspruch 1 oder 2, wobei der Deskriptor verwendet wird, um eine Form von N-dimensionalen Tensordaten anzugeben, wobei N eine ganze Zahl größer oder gleich 0 ist, wobei der Inhalt des Deskriptors mindestens einen Formparameter beinhaltet, der die Form der Tensordaten angibt.

4. Datensynchronisationsverfahren nach Anspruch 3, wobei der Deskriptor zudem verwendet wird, um eine Adresse der N-dimensionalen Tensordaten anzugeben, wobei der Inhalt des Deskriptors ferner mindestens einen Adressparameter beinhaltet, der die Adresse der Tensordaten angibt.

5. Datensynchronisationsverfahren nach Anspruch 4, wobei der Adressparameter der Tensordaten eine Basisadresse eines Bezugspunkts des Deskriptors in einem Datenspeicherplatz der Tensordaten beinhaltet.

6. Datensynchronisationsverfahren nach Anspruch 5, wobei der Formparameter der Tensordaten mindestens eines der Folgenden beinhaltet: eine Größe des Datenspeicherplatzes in mindestens einer von N Dimensionen, eine Größe des Speicherbereichs der Tensordaten in mindestens einer von N Dimensionen, einen Versatz des Speicherbereichs in mindestens einer von N Dimensionen, eine Position von mindestens zwei Scheitelpunkten an diagonalen Positionen in N Dimensionen im Verhältnis zu dem Bezugspunkt und eine Zuordnungsbeziehung zwischen einer Datenbeschreibungsposition der Tensordaten, die durch den Deskriptor angegeben ist, und einer Datenadresse der Tensordaten, die durch den Deskriptor angegeben ist.

7. Datensynchronisationsverfahren nach einem der Ansprüche 1-6, ferner umfassend: Decodieren einer empfangenen Verarbeitungsanweisung, um eine decodierte Verarbeitungsanweisung zu erhalten, wobei die decodierte Verarbeitungsanweisung einen Operationscode beinhaltet, der verwendet wird, um eine Synchronisationsverarbeitung anzuweisen.

8. Datensynchronisationseinrichtung, umfassend ein Mittel zum Ausführen des Verfahrens nach einem der Ansprüche 1 bis 7.

9. Chip mit künstlicher Intelligenz, umfassend die Datensynchronisationseinrichtung nach Anspruch 8.

10. Elektronische Vorrichtung, umfassend den Chip mit künstlicher Intelligenz nach Anspruch 9.

11. Steckkarte, umfassend eine Speichervorrichtung, eine Schnittstelleneinrichtung, eine Steuervorrichtung und den Chip mit künstlicher Intelligenz nach Anspruch 9, wobei

der Chip mit künstlicher Intelligenz mit der Speichervorrichtung, der Steuervorrichtung bzw. der Schnittstelleneinrichtung verbunden ist,
die Speichervorrichtung zum Speichern von Daten konfiguriert ist,
die Schnittstelleneinrichtung dazu konfiguriert ist, eine Datenübertragung zwischen dem Chip mit künstlicher Intelligenz und einer externen Ausrüstung umzusetzen, und
die Steuervorrichtung dazu konfiguriert ist, einen Zustand des Chips mit künstlicher Intelligenz zu überwachen.

12. Steckkarte nach Anspruch 11, wobei die Speichervorrichtung eine Vielzahl von Gruppen von Speichereinheiten beinhaltet, wobei jede Gruppe der Speichereinheiten mit einem Chip eines neuronalen Netzes durch einen Bus verbunden ist und die Speichereinheiten DDR-SDRAM sind,

der Chip eine DDR-Steuerung beinhaltet, die dazu konfiguriert ist, die Datenübertragung und Datenspeicherung jeder Speichereinheit zu steuern, und
die Schnittstelleneinrichtung eine Standard-PCIE-Schnittstelle ist.

## Revendications

1.  Procédé de synchronisation de données, comprenant :

    lorsqu'il y a des données tensorielles à synchroniser, par un premier processeur, l'envoi d'une instruction de traitement à un second processeur ;
    après réception de l'instruction de traitement, par le second processeur, le décodage de l'instruction de traitement pour obtenir l'instruction de traitement décodée ;
    lorsque l'instruction de traitement décodée est une instruction de synchronisation de descripteur, par le second processeur, l'obtention d'informations de synchronisation du descripteur dans l'instruction de traitement, où le descripteur est utilisé pour indiquer une forme de données tensorielles à synchroniser, et les informations de synchronisation du descripteur comprennent au moins l'un d'un identifiant du descripteur et du contenu du descripteur, et
    par le second processeur, la réalisation de la synchronisation des données tensorielles en fonction de l'identifiant du descripteur et/ou du contenu du descripteur dans les informations de synchronisation.

2.  Procédé de synchronisation de données selon la revendication 1, dans lequel la réalisation de la synchronisation des données tensorielles selon l'identifiant du descripteur et/ou le contenu du descripteur dans les informations de synchronisation comprend :
    lorsqu'une zone de stockage des données tensorielles indiquées par le descripteur se trouve dans un espace de stockage partagé, l'obtention des données tensorielles à partir de l'espace de stockage partagé selon les informations de synchronisation.

3.  Procédé de synchronisation de données selon la revendication 1 ou 2, dans lequel le descripteur est utilisé pour indiquer une forme de données tensorielles à N dimensions, dans lequel N est un nombre entier supérieur ou égal à 0, dans lequel
    le contenu du descripteur comprend au moins un paramètre de forme indiquant la forme des données tensorielles.

4.  Procédé de synchronisation de données selon la revendication 3, dans lequel le descripteur est également utilisé pour indiquer une adresse des données tensorielles à N dimensions, dans lequel le contenu du descripteur comprend en outre au moins un paramètre d'adresse indiquant l'adresse des données tensorielles.

5.  Procédé de synchronisation de données selon la revendication 4, dans lequel le paramètre d'adresse des données tensorielles comprend une adresse de base d'un point de référence du descripteur dans un espace de stockage de données des données tensorielles.

6.  Procédé de synchronisation de données selon la revendication 5, dans lequel le paramètre de forme des données tensorielles comprend au moins l'un des éléments suivants :
    une taille de l'espace de stockage de données dans au moins une des N dimensions, une taille de la zone de stockage des données tensorielles dans au moins une des N dimensions, un décalage de la zone de stockage dans au moins une des N dimensions, une position d'au moins deux sommets à des positions diagonales dans N dimensions par rapport au point de référence, et une relation de mappage entre une position de description de données des données tensorielles indiquées par le descripteur et une adresse de données des données tensorielles indiquées par le descripteur.

7.  Procédé de synchronisation de données selon l'une quelconque des revendications 1 à 6, comprenant en outre :
    le décodage d'une instruction de traitement reçue pour obtenir une instruction de traitement décodée, où l'instruction de traitement décodée comprend un code d'opération utilisé pour instruire le traitement de synchronisation.

8.  Appareil de synchronisation de données, comprenant des moyens pour exécuter le procédé selon l'une quelconque des revendications 1 à 7.

9. Puce d'intelligence artificielle, comprenant l'appareil de synchronisation de données selon la revendication 8.

10. Dispositif électronique, comprenant la puce d'intelligence artificielle selon la revendication 9.

11. Circuit imprimé, comprenant un dispositif de stockage, un appareil d'interface, un dispositif de commande et la puce d'intelligence artificielle selon la revendication 9, dans lequel la puce d'intelligence artificielle est connectée au dispositif de stockage, au dispositif de commande et à l'appareil d'interface, respectivement,

le dispositif de stockage est configuré pour stocker des données,
l'appareil d'interface est configuré pour mettre en œuvre un transfert de données entre la puce d'intelligence artificielle et un équipement externe, et
le dispositif de commande est configuré pour surveiller un état de la puce d'intelligence artificielle.

12. Circuit imprimé selon la revendication 11, dans lequel

le dispositif de stockage comprend une pluralité de groupes d'unités de stockage, dans lequel chaque groupe des unités de stockage est connecté à une puce de réseau neuronal par un bus, et les unités de stockage sont de la DDR SDRAM,
la puce comprend un contrôleur DDR configuré pour contrôler le transfert de données et le stockage de données de chaque unité de stockage, et
l'appareil d'interface est une interface PCIE standard.

S11

when a decoded processing instruction is a descriptor synchronization instruction, obtaining the synchronization information of the descriptor in the processing instruction

S12

executing the processing instruction according to the synchronization information

Fig. 1

X

22

21

Y

24

23

25

Fig. 2

31

synchronization information obtaining module

32

instruction executing module

Fig. 3

storage device 390

board
card

storage
unit 393

• • •

storage
unit 393

bus

control device 392

chip 389

chip 389

MCU

interface
apparatus
391

external
apparatus

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018217360 A